Europäisches Patentamt

European Patent Office

Office européen des brevets

(11) Numéro de publication: **0 206 857**
**B1**

(12) **FASCICULE DE BREVET EUROPEEN**

(45) Date de publication du fascicule du brevet:
**11.01.89**

(21) Numéro de dépôt: **86401042.6**

(22) Date de dépôt: **15.05.86**

(51) Int. Cl.⁴: **C03B 23/023**, C03B 27/04

(54) **Soufflage contrôlé du cadre de transport d'une feuille de verre.**

(30) Priorité: **17.05.85 DE 3517835**

(43) Date de publication de la demande:
**30.12.86 Bulletin 86/52**

(45) Mention de la délivrance du brevet:
**11.01.89 Bulletin 89/2**

(84) Etats contractants désignés:
**BE CH DE FR GB LI SE**

(56) Documents cités:
**EP-A- 0 003 391**
**US-A- 2 223 124**
**US-A- 4 119 424**

(73) Titulaire: **SAINT-GOBAIN VITRAGE, Les
Miroirs 18, avenue d'Alsace, F-92400 Courbevoie(FR)**
(84) Etats contractants désignés: **BE CH FR GB LI SE**

(73) Titulaire: **VEGLA VEREINIGTE GLASWERKE,
Viktoriaallee 3-5, D-5100 Aachen(DE)**
(84) Etats contractants désignés: **DE**

(72) Inventeur: **Ehre, Hubert, Am Klösterchen 27,
D-5120 Herzogenrath(DE)**

(74) Mandataire: **Leconte, Jean-Gérard et al, Saint-Gobain
Recherche 39, Quai Lucien Lefranc,
F-93304 Aubervilliers Cedex(FR)**

ACTORUM AG

## Description

La présente invention concerne un procédé pour bomber et tremper une feuille de verre en position horizontale, procédé selon lequel la feuille de verre est chauffée à sa température de bombage dans un four continu, à l'extrémité de sortie du four, est soulevée du transporteur qui lui a fait traverser ce four et est déchargée sur une forme de bombage encore appelée cadre de transport, en général en forme d'anneau à profil courbe, avec laquelle elle est transportée dans un poste de trempe, y est trempée et est tranférée ensuite sur un autre transporteur situé en aval, la forme de bombage étant alors débarrassée d'éventuels éclats de verre, ou autres par soufflage au moyen de jets gazeux, avant la prise en charge d'une nouvelle feuille de verre et un dispositif pour la mise en oeuvre de ce procédé comme defini en partie pré-caractérisante de la revendication 1.

Il arrive qu'une feuille de verre se brise pendant la trempe ou immédiatement après et se divise en de petits fragments. Dans ce cas, il se peut qu'il subsiste sur la forme de bombage des éclats de verre qui, lors de l'opération de bombage suivante, au moment où une nouvelle feuille de verre chaufée est déposée sur ladite forme de bombage, pourrait défavorablement affecter ou déformer cette nouvelle feuille de verre. Pour exclure ce risque, il est généralement connu sans toutefois qu'un document particulier puisse à cet égard être cité, de souffler sur la forme de bombage au moyen de jets d'air, avant de la renvoyer à l'extrémité du four de réchauffage, en vue de recevoir une nouvelle feuille de verre.

Ce procédé connu entraîne des frais d'énergie considérable qui sont dus au soufflage d'air comprimé sur la forme de bombage.

L'invention a pour but d'améliorer ce procédé en le rendant plus économique.

Suivant l'invention, ce but est réalisé par le fait qu'après chaque opération de trempe avant le transfert de la feuille de verre trempée sur le transporteur installe en aval et en général après chaque libération de la forme de bombage par une feuille de verre, un dispositif de surveillance automatique vérifie si la feuille de verre est ou non encore présente et dans les cas où le dispositif de surveillance constate la présence de la feuille de verre, le dispositif destiné à souffler sur la forme de bombage avant la réception d'une nouvelle feuille de verre reste inactif et dans le cas contraire il est enclenché si le dispositif de surveillance a constaté que la feuille de verre n'est plus présente sur la forme de bombage transférée dans le poste de déchargement.

Le procédé conforme à l'invention permet de réaliser des économies d'énergie importantes. En effet, le nettoyage de la forme de bombage pour la débarrasser des éventuels éclats de verre nécessite des ajutages de soufflage en quantité suffisante pour agir sur la totalité de la périphérie de la forme de bombage, ces ajutages étant alimentés en air comprimé sous une pression élevée, par exemple une pression de 6 bars pendant environ 2 secondes, pour garantir l'élimination de tous les éventuels fragments ou éclats de verre adhérents. En outre, un bris de feuille de verre ne se produit que relativement rarement et il serait donc inutile et coteux de faire fonctionner les moyens de soufflage destinés à éliminer les débris de verre à chaque opération de bombage d'une feuille de verre.

L'invention permet de réduire l'énergie à appliquer pour le nettoyage des formes de bombage à une petit fraction de celle qui était utilisée jusqu'à présent.

L'invention propose également un dispositif pour mettre en oeuvre le procédé, le dispositif étant defini dans la revendication 1.

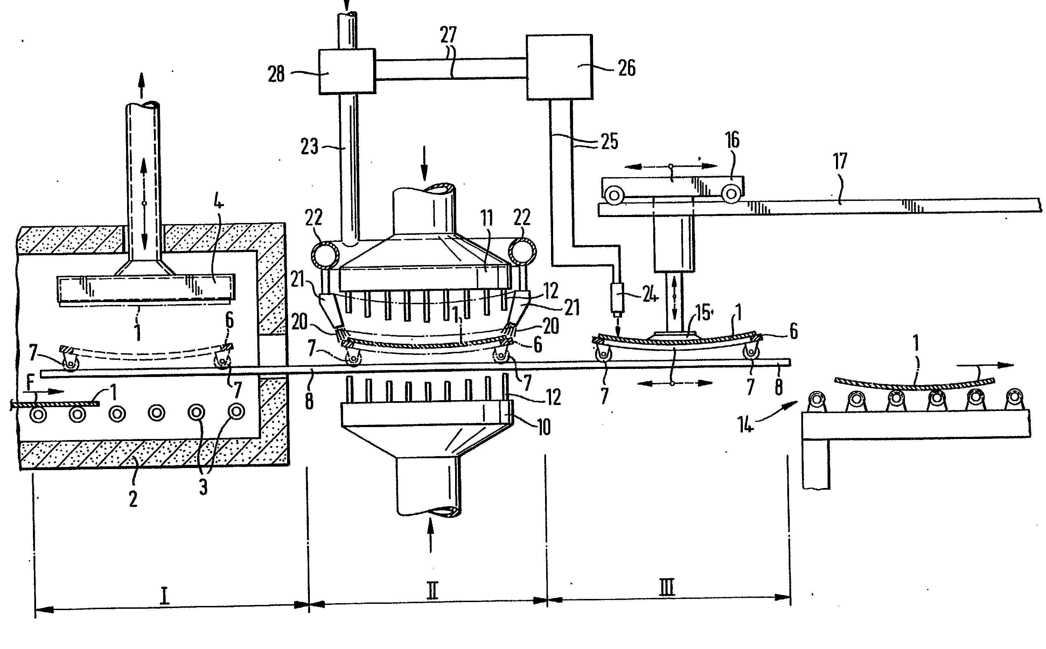

L'invention sera expliquée plus en détail avec référence à la figure annexée qui illustre schématiquement le procédé conforme à l'invention.

Les feuilles de verre 1 sont chauffées à leur température de bombage dans un four 2 au travers duquel elles sont transportées sur un convoyeur à rouleaux 3 dans le sens de la flèche F. Dans le poste de bombage I, à l'extrémité du four 2, un dispositif de préhension 4, tel un plateau aspirant par exemple en céramique est monté, apte à se déplacer verticalement vers le haut ou vers le bas, au-dessus du convoyeur à rouleaux 3. Ce dispositif de préhension 4 sert à transférer la feuille de verre 1 chaufée du convoyeur à rouleaux 3 à une forme de bombage 6 qui est montée déplaçable sur des rails 8 en roulant au moyen de roues 7; grâce à cela la feuille de verre peut être amenée dans les postes de traitement suivants.

Pour transférer la feuille de verre 1 sur la forme de bombage 6, le dispositif de transfert 4 est abaissé sur la feuille de verre 1, est mis en dépression et, après la saisie de la feuille de verre 1, est amené dans une position supérieure illustrée sur la figure. La forme de bombage 6 est alors introduite dans le four 2 et est positionnée en-dessous du dispositif de transfert 4 maintenant la feuille de verre 1. Lorsque la dépression qui retient la feuille de verre est coupée, ladite feuille de verre 1 tombe sur la forme de bombage 6 dont elle épouse le profil grâce à l'effet de la gravité.

La forme de bombage chargée de la feuille de verre est alors déplacée dans le poste de trempe II disposé à côté du four 2 ou derrière celui-ci, où la feuille de verre à présent bombée subit une trempe thermique. En position inférieure, en-dessous des rails 8 est disposé un caisson de soufflage inférieur 10 et au-dessus des rails 8 est installé un caisson de soufflage supérieur 11, ces caissons 10 et 11 étant pourvus d'une pluralité de buses de soufflage ou d'orifices de soufflage 12. Dès que la forme de bombage 6 servant de cadre de transport pour la feuille de verre bombée est positionnée dans le poste de trempe, l'alimentation en air et en général en gaz des caissons de soufflage 10 et 11 se fait et la feuille de verre est brutalement refroidie et de cette façon trempée.

La forme de bombage 6 est ensuite amenée en même temps que la feuille de verre trempé 1 qu'elle porte dans un poste de déchargement III qui suit, dans lequel la feuille de verre 1 est enlevée de la forme de bombage 6 et est transférée sur un transporteur à rouleux 14. Le transfert peut s'effectuer, par exemple, au moyen d'une ventouse 15 pouvant être abaissée, ladite ventouse étant monté sur un chariot 16 déplaçable sur des rails 17. Bien entendu, d'autres moyens pourraient aussi être prévus pour soulever la feuille de verre 1 de la forme de bombage 6 et la transférer sur le dispositif transporteur suivant.

La forme de bombage 6 est à présent disponible pour le cycle de bombage et de trempe suivant et est amenée à cet effet à nouveau dans le four 2 où elle prend en charge la feuille de verre suivante. Sur son trajet de retour en direction du four 2, la forme de bombage 6 est positionnée à l'intérieur du poste de trempe II de façon à être soumise à un soufflage au moyen de jets de gaz et en général d'air comprimé 20, en vue d'éliminer des éclats de verre éventuels. Les jets d'air comprimé 20 sont formés par une série d'ajutages 21 orientés vers la forme de bombage 6, qui sont disposés le long du contour de la forme 6 et qui sont alimentés en air comprimé par une rampe annulaire 22 et par la conduite 23.

Dans le poste de déchargement III, au-dessus ou en-dessous de la feuille de verre 1 est prévu un détecteur 24 qui constate si, lors de l'introduction de la forme de bombage 6 dans ce poste de déchargement III, une feuille de verre 1 est présente ou non sur la forme de bombage. Lorsque le détecteur 24 ne détecte pas de feuille de verre, cela signifie en règle générale que la feuille de verre s'est brisée au cours de son trajet allant du poste de bombage I à ce poste de déchargement III. Dans ce cas, il y a risque que des éclats de verre soient présents sur la forme de bombage 6 et il faut les éliminer. Le détecteur 24 envoie alors, par l'intermédiaire d'une ligne 25, un signal correspondant à une unité de commande 26. A l'intervention de cette unité de commande 26, par l'intermédiaire de la conduite 27, une vanne 28 est ouverte pendant une courte période d'environ 2 secondes au moment où la forme de bombage 6 est à nouveau positionnée sur son trajet de retour, dans le poste de trempe II. Les ajutages 21 sont alors alimentés en air comprimé, de sorte que la forme de bombage est débarrassée par les jets d'air comprimé 20 des éclats de verre éventuellement adhérents.

A titre de détecteur 24, on peut utiliser des dispositifs connus appropriés. Par exemple, il peut s'agir dans ce cas d'un dispositif optoélectronique, en particulier d'une barrière lumineuse à réflexion, ou aussi d'un dispositif pneumatique approprié. Selon la structure de ce détecteur 24, il peut être nécessaire d'installer de l'autre côté de la feuille de verre, en face du détecteur 24, un émetteur correspondant, de sorte que les rayons lumineux ou les jets de gaz provenant de cet émetteur soient interrompus par la feuille de verre 1 et que le détecteur émette un signal lorsqu'une telle interruption par la feuille de verre n'a pas lieu.

L'invention a été décrite en prenant comme exemple une installation de bombage/trempe ayant un dispositif de préhension 4 constitué par un plateau aspirant par exemple en céramique.

Bien entendu l'invention est également valable pour des installations de bombage/trempe légèrement différentes. Ainsi le plateau peut ne pas être aspirant, ne pas être en céramique, le transfert peut se faire autrement que par un mouvement vertical, le plateau peut être plat ou courbe, fixe ou mobile, etc...

Ce plateau peut être aspirant grâce à une dépression s'exerçant au travers de sa surface, ou à la périphérie de sa surface, ou les deux à la fois. Ce plateau peut ne pas être aspirant et la feuille de verre mise en contact avec sa surface par un autre moyen par exemple courant gazeux inférieur ascendant, moyens mécaniques élévateurs, etc...

L'invention vaut pour tout ensemble possédant une forme de bombage ou cadre de bombage ou de transport, prenant en charge des feuilles de verre susceptibles de se briser et de laisser des éclats qu'il faut éliminer.

## Revendications

1. Procédé pour bomber et tremper une feuille de verre (1) en position horizontale, suivant lequel la feuille de verre (1) est chauffée à sa température de bombage dans un four (2), est soulevée du convoyeur (3) qui l'a transportée au travers du four (2) à l'extrémité dudit four et est déchargée sur une forme de bombage (6), en compagnie de laquelle elle est transportée dans un poste de trempe (II) suivant, est trempée dans ce poste, puis est transférée dans un poste de déchargement (III) sur un transporteur (14) situé en aval, la forme de bombage (6) étant débarrassée des éclats de verre éventuels qui y adhèrent, par soufflage au moyen de jets d'air (20), avant la prise en charge d'une nouvelle feuille de verre, caractérisé en ce qu'après chaque opération de trempe, avant le transfert de la feuille de verre (1) sur le transporteur situé en aval, un dispositif de surveillance automatique (24) vérife si la feuille de verre est encore présente et, au cas où le dispositif de surveillance constate la présence de la feuille de verre, le dispositif (21) destiné à souffler sur la forme de bombage avant le réception d'une nouvelle feuille de verre reste inactif dans le cas contraire il est enclenché si le dispositif de surveillance (24) a constaté que la feuille de verre n'est plus présente sur la forme de bombage (6) transférée dans le poste de déchargement (III).

2. Dispositif pour la mise en oeuvre de ce procédé suivant la revendication 1, comprenant un four de chauffage (2), dans la section d'extrémité duquel est installé un dispositif de préhension (4) destiné à déposer la feuille de verre (1) chauffée sur une forme de bombage mobile (6), un poste de trempe (II) pour tremper la feuille de verre (1), un poste de déchargement (III) pour transférer la feuille de verre (1) trempée de la forme de bombage (6) sur un transporteur (14) situé en aval, la forme de bombage (6) pouvant, après l'enlèvement de la feuille de verre trempée (1), être ramenée dans le four de chauffage (2), en vue de la réception de la feuille de verre suivante, et comprenant ensuite une couronne d'ajutages (21) supplémentaires pour débarrasser la forme de bombage (6) des éclats de verre adhérents éventuels avant son retour dans le four de chauffage (2), lesdits ajutages (21) étant alimentés en air comprimé, caractérisé en ce que dans le poste de déchargement (III) ou sur le trajet allant du poste de trempe (II) au poste de déchargement (III), un détecteur (24) actionné par la feuille de verre (1), une unité de commande (26) pilotée par le détecteur (24) et une vanne (28) actionnée par l'unité de commande (26), sont installés pour agir sur la conduite d'alimentation en gaz (23) de la couronne d'ajutages (21, 22), le circuit de commande étant agencé d'une manière telle que la vanne (28) ne soit ouverte que lorsque l'absence d'une feuille de verre (1) sur la forme de bombage (6) a été constatée au cours du trajet de la forme de bombage (6) allant du poste de trempe (II) au poste de déchargement (III).

3. Dispositif suivant la revendication 2, caractérisé en ce que le détecteur (24) est un capteur pneumatique.

4. Dispositif suivant la revendication 2, caractérisé en ce que le détecteur (24) est une barrière lumineuse à réflexion.

## Patentansprüche

1. Verfahren zum Biegen und Vorspannen einer Glasscheibe (1) in horizontaler Lage, bei dem die Glasscheibe (1) in einem Ofen (2) auf ihre Biegetemperatur erwärmt, am Ende des Ofens von dem Förderer (3), der die Glasscheibe durch den Ofen (2) transportiert hat, abgehoben und auf einer Biegeform (6) abgelegt wird, mit der sie in eine nachfolgende Vorspannstation (II) transportiert, dort vorgespannt und anschliessend in einer Übergabestation (III) auf einen nachfolgenden Förderer (14) übergeben wird, wobei die Biegeform (6) von eventuell anhaftenden Glassplittern durch Beblasen mit Luftstrahlen (20) befreit wird, bevor sie eine neue Glasscheibe aufnimmt, dadurch gekennzeichnet, dass nach jedem Vorspannvorgang vor der Übergabe der Glasscheibe (1) auf den nachfolgenden Förderer durch eine automatische Überwachungsvorrichtung (24) geprüft wird, ob die Glasscheibe noch vorhanden ist, und dass in dem Fall, in dem die Überwachungsvorrichtung das Vorhandensein der Glasscheibe feststellt, die Einrichtung (21) zum Beblasen der Biegeform vor der Aufnahme einer neuen Glasscheibe abgeschaltet bleibt und in dem entgegengesetzten Fall eingeschaltet wird, wenn die Überwachungsvorrichtung (24) festgestellt hat, dass die Glasscheibe auf der Biegeform (6) nach deren Überführung in die Übergabestation (III) nicht mehr vorhanden ist.

2. Vorrichtung zur Durchführung des Verfahrens nach Anspruch 1, mit einem Erwärmungsofen (2), in dessen Endabschnitt eine Übergabevorrichtung (4) zum Ablegen der erwärmten Glasscheibe (1) auf eine verfahrbare Biegeform (6) angeordnet ist, einer Vorspannstation (II) zum Vorspannen der Glasscheibe (1) und einer Übergabestation (III) zur Übergabe der vorgespannten Glasscheibe (1) von der Biegeform (6) auf einen nachgeschalteten Förderer (14), wobei die Biegeform (6) nach Entfernen der vorgespannten Glasscheibe (1) zur Aufnahme der nächsten Glasscheibe in den Erwärmungsofen (2) zurückfahrbar ist, und mit einem Ring zusätzlicher Düsen (21), um die Biegeform (6) vor dem Wiedereintritt in den Erwärmungsofen (2) durch Beaufschlagung mit Druckluft von eventuell anhaftenden Glassplittern zu befreien, dadurch gekennzeichnet, dass in der Übergabestation (III), oder auf dem Weg von der der Vorspannstation (II) zur Übergabestation (III), ein von der Glasscheibe (1) betätigter Detektor (24), eine von dem Detektor (24) angesteuerte Steuereinheit (26), und ein von der Steuereinheit (26) betätigtes Ventil (28) zur Einwirkung auf die Gaszuleitung (23) zu dem Düsenring (21, 22) vorgesehen ist, wobei der Steuerkreis so angelegt ist, dass das Ventil (28) nur dann geöffnet wird, wenn auf der Biegeform (6) auf dem Weg von der Vorspannstation (II) zur Übergabestation (III) keine Glasscheibe (1) festgestellt wurde.

3. Vorrichtung nach Anspruch 2, dadurch gekennzeichnet, dass der Detektor (24) ein pneumatisch betätigter Fühler ist.

4. Vorrichtung nach Anspruch 2, dadurch gekennzeichnet, dass der Detektor (24) eine Reflexionslichtschranke ist.

## Claims

1. Process for bending to a convex shape and tempering glass (1) in the horizontal position, according to which the glass sheet (1) is heated to its convex shaping temperature in an oven (2), is raised from the conveyor (3) which has conveyed it through the oven (2) to the end of said oven and is discharged onto a convex shaping mould (6), in company with which it is conveyed into a following tempering station (II), where it is tempered and then transferred to a discharge station (III) on a downstream conveyor (14), the convex shaping mould (6) being freed from any glass splinters adhering thereto by blowing by means of air jets (20) before taking up a new glass sheet, characterized in that after each tempering operation and prior to the transfer of the glass sheet (1) to the downstream conveyor, an automatic monitoring device (24) checks whether the glass sheet is still present and, in the case where the monitoring device notes that a glass sheet is present, the device (21) intended to blow onto the convex shaping mould prior to receiving a new glass sheet remains inactive and in the opposite case it is activated if the monitoring device (24) has detected that a glass sheet is no longer present on the convex shaping mould (6) transferred into the discharge station (III).

2. Apparatus for performing the process according to claim 1, comprising a heating oven (2), in whose end section is installed a gripping device (4) for depositing the heated glass sheet (1) on a mobile convex shaping mould (6), a tempering station (II) for tempering the glass sheet (1), a discharge station (III) for transferring the tempered glass sheet (1) from the convex shaping mould (6) to an downstream conveyor (14), whereby following the removal of the tempered glass sheet (1), the mould (6) can be brought into the heating furnace (2) with a view to receiving the following glass sheet, and then having a ring of supplementary nozzles (21) for freeing the convex shaping mould (6) of any adhereing glass splinters prior to its return into the heating oven (2), said nozzles (21) being supplied with compressed air, characterized in that in the discharge station (III) or on the path from the tempering station (II) to the discharge station (III) a detector (24) actuated by the glass sheet, a control unit (26) controlled by the detector (24) and a valve (28) actuated by the control unit (26) are installed in order to act on the gas supply duct (23) of the ring of nozzles (21, 22), the control circuit being arranged in such a way that valve (28) is only open when the absence of a glass sheet (1) on the convex shaping mould (6) has been established during the passage of the mould (6) from the tempering station (II) of the discharge station (III).

3. Apparatus according to claim 2, characterized in that the detector (24) is a pneumatic sensor.

4. Apparatus according to claim 2, characterized in that the detector (24) is a reflecting light barrier.